# EUROPÄISCHE PATENTSCHRIFT

(11) **EP 2 792 465 B1**
(45) Veröffentlichungstag und Bekanntmachung des Hinweises auf die Patenterteilung: **18.11.2015**
(21) Anmeldenummer: 13164162.3
(22) Anmeldetag: 17.04.2013
(51) Int. Cl.: B29C 45/67, B22D 17/26, B29C 45/17

(54) **Säulenauszugsvorrichtung**
Column extension device
Dispositif d'extraction de colonne

(43) Veröffentlichungstag der Anmeldung: 22.10.2014
(73) Patentinhaber: Bühler AG, 9240 Uzwil (CH)
(72) Erfinder: Tobler, Marco, 9000 St. Gallen (CH); Knechtle, Andreas, 8500 Frauenfeld (CH)
(74) Vertreter: Hepp Wenger Ryffel AG

(56) Entgegenhaltungen:
- WO-A1-2008/131571

## Beschreibung

Die vorliegende Erfindung betrifft eine Säulenauszugvorrichtung, insbesondere für eine Druckgiessmaschine, sowie eine Verfahren zum Ausziehen von Säulen, insbesondere aus einer Druckgiessmaschine.

Druckgiessmaschinen werden zur Herstellung von metallischen Gussteilen wie beispielsweise Motorblöcken eingesetzt. Beispielhaft ist in der WO 2008/131571 A1 eine horizontale Zweiplatten-Druckgiessmaschine beschrieben. Diese Zweiplatten-Druckgiessmaschine umfasst eine bewegliche Aufspannplatte (BAP) und eine feste Aufspannplatte (FAP), an denen jeweils eine Giessformhälfte angeordnet ist. Durch Bewegung der beweglichen Aufspannplatte kann die Druckgiessform geöffnet und geschlossen werden. In geschlossener Stellung werden die beiden Aufspannplatten fest aneinander gepresst, so dass die beiden Giessformhälften eine geschlossene Form bilden. In die geschlossene Form wird eine Metallschmelze unter Druck eingeführt und unter Erstarrung abgekühlt. Das erstarrte Gussteil kann nach Öffnen der Form (durch Bewegung der beweglichen Aufspannplatte) entnommen werden. Die Bewegung der beweglichen Aufspannplatte erfolgt bei der Maschine gemäss der WO 2008/131571 A1 über Säulen, vorzugsweise 4 Säulen.

Zum Wechsel der Giessform ist es mitunter erforderlich, eine oder mehrere Säulen aus dem Raum zwischen beweglicher Aufspannplatte und fester Aufspannplatte herauszuziehen, damit ein ausreichender Zugang zu den Giessformen beziehungsweise ein Herausnehmen oder Einführen von Giessformen ermöglicht wird.

In der WO 2008/131571 A1 wird vorgeschlagen, die Säulen mit Hilfe eines auf der beweglichen Aufspannplatte befindlichen Säulenauszugzylinders aus dem Raum zwischen beweglicher und fester Aufspannplatte zu ziehen. Beim Ausziehen der Säule wird im geschlossenen Formzustand die Kupplungsverbindung der Säule zur festen Aufspannplatte gelöst, während sie an die bewegliche Aufspannplatte gekuppelt bleibt. Durch Öffnen der Form wird die Säule über die Bewegung der beweglichen Aufspannplatte aus der festen Aufspannplatte herausgezogen. Zum vollständigen Herausziehen der Säule wird anschliessend deren Kupplungsverbindung zur beweglichen Aufspannplatte gelöst, so dass durch eine Ausfahrbewegung des an die Säulen gekuppelten Säulenauszugzylinders die Säule von der beweglichen Aufspannplatte weg bewegt wird.

Diese Lösung hat den Nachteil, dass bei grossen Druckgiessmaschinen die vergleichsweise langen Säulen im ausgezogenen Zustand nicht gut abgestützt sind und zum Durchhängen neigen.

In der US-7,604,037 B2 ist eine analoge Säulenauszugeinheit gezeigt; allerdings ist der Säulenauszugzylinder nicht auf der beweglichen Aufspannplatte angeordnet, sondern auf einem Rahmen hinter der beweglichen Aufspannplatte. Das Säulenziehen erfolgt vollständig mit Hilfe des Säulenauszugzylinders. Bei dieser Lösung sind die vorstehend beschriebenen Nachteile noch verstärkt, da lange Säulenauszugzylinder und lange Säulen verwendet werden müssen. Als weitere Konsequenz erhöht sich der Platzbedarf für das Säulenziehen.

In der US-7,824,167 B2 wird das Säulenziehen allein durch die Bewegung der beweglichen Aufspannplatte in Öffnungsposition durchgeführt. Die bewegliche Aufspannplatte wird mit Hilfe eines komplizierten Elektroantriebs bewegt. Es wird zudem nur ein begrenzter Raum zwischen fester und beweglicher Aufspannplatte nach dem Säulenziehen zugänglich, da die Säulen nicht vollständig aus dem Raum zwischen beweglicher und fester Aufspannplatte gezogen werden.

In der JP-2007-331 332 A ist ein Säulenauszugmechanismus für eine Zweiplatten-Druckgiessmaschine beschrieben, bei welchem die Säule nicht in Öffnungsrichtung der beweglichen Aufspannplatte herausgezogen wird, sondern in entgegen gesetzter Richtung. Im ausgezogenen Zustand befindet sich die Säule dann auf der von der beweglichen Aufspannplatte abgewandten Seite der festen Aufspannplatte.

Es ist bekannt, bei horizontalen Dreiplatten-Druckgiessmaschinen die fest installierte hintere Platte für den Säulenauszug heranzuziehen. In der US-4,285,384 ist ein Säulenauszugmechanismus beschrieben, bei welcher eine oder mehrere Säulen derart herausgezogen werden, dass sie während der Bewegung der beweglichen Aufspannplatte in eine Öffnungsposition fest an die bewegliche Aufspannplatte gekuppelt sind. Anschliessend wird die Säule in der so erreichten Position fest an die hintere Platte gekuppelt und von der beweglichen Aufspannplatte abgekuppelt. Die bewegliche Aufspannplatte wird in Schliessstellung zurückgefahren. Nun wird die Säule wieder an die bewegliche Aufspannplatte gekuppelt und von der hinteren Platte abgekuppelt, und der gesamte Vorgang wird bis zum vollständigen Herausziehen der Säule wiederholt. Dieser Mechanismus ist auf Dreiplatten-Druckgiessmaschinen limitiert, da bei Zweiplatten-Druckgiessmaschinen keine hintere Platte vorhanden ist, welche für das Säulenziehen eingesetzt werden könnte.

Es war die Aufgabe der vorliegenden Erfindung, eine Säulenauszugvorrichtung bereitzustellen, welche die vorstehend beschriebenen Nachteile des Stands der Technik überwindet.

Gemäss der vorliegenden Erfindung wird diese Aufgabe gelöst durch eine Säulenauszugvorrichtung für mindestens eine Säule einer Formmaschine, insbesondere einer Druckgiessmaschine, mit einer festen Aufspannplatte mit daran angeordneter erster Giessformhälfte und einer beweglichen Aufspannplatte mit daran angeordneter zweiter Giessformhälfte, wobei die bewegliche Aufspannplatte auf in der festen Aufspannplatte lösbar befestigten Säulen, vorzugsweise vier an den Ecken der festen Aufspannplatte lösbar befestigten Säulen, bewegt werden kann, **dadurch** gekennzeichnet, dass die Säulenauszugsvorrichtung folgende Einheiten aufweist:
- eine an der beweglichen Aufspannplatte angeordnete Befestigungsvorrichtung zur lösbaren Verbindung mit einer Säule,
- eine weitere Befestigungsvorrichtung zur lösbaren Verbindung mit einer Säule, welche an einem Steg angeordnet ist, der sich auf der von der festen Aufspannplatte abgewandten Seite der beweglichen Aufspannplatte befindet.

Gemäss der vorliegenden Erfindung wird unter einer Formmaschine eine Maschine zum Herstellen von Formteilen verstanden, bei welcher Material in einer vorgegebenen Hohlform in die gewünschte Form gebracht wird. Erfindungsgemäss bevorzugt handelt es sich bei der Formmaschine um eine Druckgiessmaschine. Die vorliegende Erfindung kann jedoch auch bei anderen Formmaschinen wie Spritzgussmaschinen Anwendung finden.

Gemäss der vorliegenden Erfindung ist der Begriff "angeordnet" so zu verstehen, dass das entsprechende Bauteil, beispielsweise eine Befestigungsvorrichtung, direkt oder indirekt mit einem anderen Bauteil wie beispielsweise der beweglichen Aufspannplatte verbunden ist.

Die Säulenauszugvorrichtung der vorliegenden Erfindung weist keinen auf der beweglichen Aufspannplatte angeordneten Säulenauszugzylinder auf, wie er beispielsweise in der WO 2008/131571 A1 gezeigt ist. Dadurch wird das Gewicht der beweglichen Aufspannplatte erheblich reduziert; die Formmaschine kann dynamischer geöffnet und geschlossen werden.

Die Säulenauszugvorrichtung der vorliegenden Erfindung zeichnet sich dadurch aus, dass auf der von der festen Aufspannplatte abgewandten Seite der beweglichen Aufspannplatte ein Steg angeordnet ist, in welchen die Säule während des Ausziehens eingeführt wird. Der Steg weist eine Befestigungsvorrichtung zur lösbaren Verbindung mit einer Säule auf, mit welcher die Säule am Steg fixiert werden kann. Der Steg erfüllt einerseits eine wesentliche Aufgabe beim Säulenausziehmechanismus der vorliegenden Erfindung, wie nachstehend ausgeführt wird. Anderseits hat der Steg eine Stützfunktion. Die herausgezogenen Säulen werden in den Stegen abgestützt, wodurch sich die Belastung auf die Spannzylinder reduziert und ein Durchhängen der Säulen verringert wird.

Gegenüber der in der US-7,604,037 B2 beschriebenen Lösung können bei der vorliegenden Erfindung kürzere Säulen eingesetzt werden, wodurch sich die gesamte Maschinenlänge verkürzt und der Platzbedarf verringert.

Bei der vorliegenden Erfindung erfolgt das Säulenziehen durch eine Bewegung der beweglichen Aufspannplatte, wobei während dieser Bewegung die zu ziehende Säule über eine Befestigungsvorrichtung fest mit der beweglichen Aufspannplatte verbunden ist. Die Säule wird soweit aus dem Bereich zwischen fester und beweglicher Aufspannplatte gezogen, bis sie in den hinter der beweglichen Aufspannplatte angeordneten Steg eingeführt wurde. Anschliessend wird die Säule über eine Befestigungsvorrichtung an dem Steg fixiert und von der beweglichen Aufspannplatte gelöst. Die bewegliche Aufspannplatte kann wieder in Schliessrichtung bewegt und nach vollendeter Bewegung erneut über die Befestigungsvorrichtung fest mit der Säule verbunden werden. Die Fixierung der Säule mit dem Steg wird gelöst, und durch erneute Bewegung der beweglichen Aufspannplatte in Richtung des Stegs wird die Säule um einen weiteren Abschnitt aus dem Bereich zwischen fester und beweglicher Aufspannplatte gezogen. Dieses Verfahren, das erfindungsgemäss als Pilgerschrittverfahren bezeichnet wird, ist so oft durchzuführen, bis die Säule um einen vorbestimmten Abschnitt aus dem Bereich zwischen fester und beweglicher Aufspannplatte gezogen wurde.

Bei einer herkömmlichen Druckgiessmaschine ist das erfindungsgemässe Verfahren üblicherweise zweimal bis dreimal, vorzugsweise dreimal, nacheinander durchzuführen, um einen ausreichenden Säulenauszug zu erreichen.

Bei einer herkömmlichen Druckgiessmaschine wird die bewegliche Aufspannplatte über 4 Säulen geführt, welche an den Ecken der festen Aufspannplatte lösbar angeordnet sind und durch Öffnungen in den Ecken der beweglichen Aufspannplatte geführt sind. Um ausreichenden Zugang zu dem Bereich zwischen fester und beweglicher Aufspannplatte zu erhalten, sind vorzugsweise zumindest die beiden oberen Säulen herauszuziehen. Eine bevorzugte Ausführungsform der vorliegenden Erfindung betrifft eine Formmaschine und ein Verfahren, umfassend das Ausziehen der beiden oberen Säulen der Maschine.

Formmaschinen und insbesondere Druckgiessmaschinen sind hinlänglich bekannt und müssen hier nicht im Detail beschrieben werden. Wesentlicher Bestandteil dieser Maschinen sind zwei Giessformhälften, welche zusammen die äusseren Konturen des herzustellenden Formteils vorgeben. Jeweils eine Giessformhälfte befindet sich auf einer festen Aufspannplatte und einer beweglichen Aufspannplatte. Durch Bewegung der beweglichen Aufspannplatte in die Schliessposition werden die beiden Giessformhälften fest gegeneinander gepresst und bilden somit eine hohle Form.

Erfindungsgemäss wird unter Schliessposition die maximale Position der beweglichen Aufspannplatte verstanden, welche die bewegliche Aufspannplatte bei einer Bewegung in Richtung der festen Aufspannplatte einnehmen kann, bevor ihre weitere Bewegung durch die feste Aufspannplatte verhindert wird. Erfindungsgemäss wird unter Schliessrichtung eine Bewegung der beweglichen Aufspannplatte in Richtung der festen Aufspannplatte verstanden.

In die gebildete hohle Form kann Material zur Herstellung des gewünschten Formkörpers eingeführt werden. Im Druckgussverfahren handelt es sich herbei um geschmolzene Metalle oder geschmolzene Metall-Legierungen, die unter Druck mit Hilfe eines Giesszylinders durch einen Giesskanal in die Form gepresst werden. Um eine Öffnung der Form unter diesen belastenden Bedingungen zu vermeiden, wird die bewegliche Aufspannplatte mit Hilfe eines Schliesszylinders und von an den Säulen befestigten Spannzylindern in ihrer Schliessposition gehalten. Nach Erstarren des Materials in der Form wird die Form durch Bewegen der beweglichen Aufspannplatte in Öffnungsrichtung geöffnet, und das fertige Formteil kann entnommen werden.

Erfindungsgemäss wird unter Öffnungsrichtung eine Bewegung der beweglichen Aufspannplatte in Richtung von der festen Aufspannplatte weg verstanden. Erfindungsgemäss wird unter Öffnungsposition die maximale Position der beweglichen Aufspannplatte verstanden, welche die bewegliche Aufspannplatte bei einer Bewegung in Richtung von der festen Aufspannplatte weg konstruktionsbedingt einnehmen kann.

Die Säulen sind wie vorstehend ausgeführt mit der festen Aufspannplatte lösbar verbunden. Die hierfür erforderliche Befestigungsvorrichtung zur lösbaren Verbindung mit einer Säule kann erfindungsgemäss auf bekannte Weise durch geeignete Kupplungsverbindungen erfolgen, wie sie im Stand der Technik beschrieben sind. Beispielhaft sei eine zweiteilige Mutter genannt, d.h. eine Mutter mit zwei separaten Hälften, die von der Säule weg oder zu dieser hin bewegt werden können, beispielsweise durch einen hydraulischen Antrieb. Um die Säule in der festen Aufspannplatte zu fixieren, werden die beiden Hälften der Mutter zusammengepresst, wodurch sich eine formschlüssige Verbindung zwischen der so gebildeten Mutter und der Säule ausbildet. Vorzugsweise ist die Befestigungsvorrichtung zur lösbaren Verbindung mit einer Säule an einer Ecke der festen Aufspannplatte auf der von der beweglichen Aufspannplatte abgewandten Seite angeordnet. Besonders bevorzugt ist in jeder Ecke der festen Aufspannplatte auf der von der beweglichen Aufspannplatte abgewandten Seite eine derartige Befestigungsvorrichtung zur lösbaren Verbindung mit einer Säule angeordnet.

Während des normalen Formbetriebs der erfindungsgemässen Formmaschine sind die Säulen durch die vorstehend beschriebene Befestigungsvorrichtung zur lösbaren Verbindung mit einer Säule fest mit der festen Aufspannplatte verbunden. Nur während des Vorgangs des Säulenziehens wird diese Verbindung gelöst.

An der beweglichen Aufspannplatte der erfindungsgemässen Formmaschine ist, vorzugsweise an einer Ecke auf der von der festen Aufspannplatte abgewandten Seite, als Bestandteil der erfindungsgemässen Säulenauszugvorrichtung eine nachstehend im Detail beschriebene weitere Befestigungsvorrichtung zur lösbaren Verbindung mit einer Säule angeordnet. Da wie vorstehend ausgeführt im Fall einer Formmaschine, wie einer Druckgiessmaschine, mit vier Säulen die beiden oberen Säulen zum Auswechseln der Form aus dem Bereich zwischen fester und beweglicher Aufspannplatte herausgezogen werden sollen, sind vorzugsweise zumindest an den beiden oberen Ecken der beweglichen Aufspannplatte derartige Befestigungsvorrichtungen zur lösbaren Verbindung mit einer Säule angeordnet. Es ist aber selbstverständlich möglich, an allen Ecken der beweglichen Aufspannplatte auf der von der festen Aufspannplatte abgewandten Seite derartige Befestigungsvorrichtungen zur lösbaren Verbindung mit einer Säule bereitzustellen, um ein Herausziehen sämtlicher Säulen aus der Maschine zu ermöglichen.

Die an der beweglichen Aufspannplatte angeordnete Befestigungsvorrichtung zur lösbaren Verbindung mit einer Säule der Säulenauszugvorrichtung kann auf aus dem Stand der Technik bekannte Art und Weise realisiert werden. Bevorzugt ist eine Kupplung, mit welcher wahlweise eine formschlüssige oder kraftschlüssige Verbindung mit der Säule hergestellt werden kann.

Herkömmlicherweise bei Formmaschinen wie Druckgiessmaschinen eingesetzte Säulen weisen in dem Abschnitt, in welchem sie bei normalem Formbetrieb der Maschine in Kontakt mit der beweglichen Aufspannplatte kommen, Rillen auf. Diese Rillen dienen dazu, eine möglichst feste Verbindung zwischen beweglicher Aufspannplatte und Säule herzustellen. Insbesondere während des Giessbetriebs einer Druckgiessmaschine treten wie vorstehend beschrieben enorme Belastungen auf, unter denen die Form zuverlässig geschlossen gehalten werden muss. Hierzu wird durch die an der befestigten Aufspannplatte angeordnete Befestigungsvorrichtung eine formschlüssige Kupplung mit der Säule hergestellt. Vorzugsweise wird hierfür eine zweiteilige Mutter verwendet, d.h. eine Mutter mit zwei separaten Hälften, die von der Säule weg oder zu dieser hin bewegt werden können, beispielsweise durch einen hydraulischen Antrieb. Die mit der Säule in Kontakt tretenden Innenflächen der Mutterhälften weisen Rillen auf, welche formschlüssig in Kontakt mit den Rillen auf der Säulenoberfläche in Wechselwirkung treten können. Mit anderen Worten kann eine formschlüssige Verbindung erzeugt werden, indem eine Erhebung zwischen zwei Rillen auf der Innenfläche der Mutterhälften in eine Rille auf der Säulenoberfläche eingreift, und umgekehrt. Um die Säule in der beweglichen Aufspannplatte zu fixieren, werden die beiden Hälften der Mutter zusammengepresst, wodurch sich die vorstehend beschriebene formschlüssige Verbindung zwischen der so gebildeten Mutter und der Säule ausbildet.

Selbstverständlich kann die formschlüssige Verbindung zwischen Säule und beweglicher Aufspannplatte auch auf andere bekannte Weise realisiert werden als durch die vorstehend beschrieben Rillen. Die vorstehend beschrieben Ausführungsform ist jedoch erfindungsgemäss bevorzugt.

Während des normalen Formbetriebs der erfindungsgemässen Formmaschine wird die bewegliche Aufspannplatte auf den Säulen bewegt, indem die vorstehend beschriebene formschlüssige Kupplung gelöst wird, wodurch die bewegliche Aufspannplatte mit Hilfe eines herkömmlichen Antriebs in Schliessrichtung oder Öffnungsrichtung bewegt werden kann. Um die bewegliche Aufspannplatte in einer gewünschten Position zu fixieren, wird die vorstehend beschrieben formschlüssige Kupplung mit der Säule hergestellt.

Während des nachstehend im Detail beschriebenen Säulenauszugbetriebs der erfindungsgemässen Formmaschine wird zunächst die vorstehend beschriebene formschlüssige Verbindung zwischen Säule und beweglicher Aufspannplatte hergestellt, die Kupplung der Säulen mit der festen Aufspannplatte gelöst und die bewegliche Aufspannplatte aus der Schliessposition in Öffnungsrichtung bewegt. In einem weiteren Schritt wird, wie nachstehend erläutert, die Säule in dem Steg der Säulenauszugsvorrichtung fixiert, die Kupplung zwischen beweglicher Aufspannplatte und Säule gelöst und die bewegliche Aufspannplatte in Schliessrichtung zurück gefahren. Um die Säule weiter aus dem Bereich zwischen fester und beweglicher Aufspannplatte herauszuziehen, erfolgt eine erneute Kupplung zwischen beweglicher Aufspannplatte und Säule. In diesem Verfahrensschritt kann jedoch in der Regel keine formschlüssige Kupplung mehr zwischen beweglicher Aufspannplatte und Säule realisiert werden, da sich der Rillen aufweisende Oberflächenabschnitt der Säule bereits an einer von der beweglichen Aufspannplatte entfernten Position befindet. In diesem Verfahrensabschnitt wird daher vorzugsweise eine kraftschlüssige Verbindung zwischen beweglicher Aufspannplatte und Säule realisiert, indem die Hälften der Mutter mit hohem Kraftaufwand fest auf einen nicht gerillten Oberflächenabschnitt der Säule gepresst werden. Diese Kopplung ist nicht so fest wie die vorstehend beschrieben formschlüssige Kopplung, genügt aber für den Zweck des Säulenziehens.

Wesentlicher Bestandteil der erfindungsgemässen Säulenauszugsvorrichtung ist ein Steg, welcher auf der von der festen Aufspannplatte abgewandten Seite der beweglichen Aufspannplatte angeordnet ist. Der Steg weist eine Befestigungsvorrichtung zur lösbaren Verbindung mit einer Säule auf, welche derart am Steg angeordnet ist, dass eine zu ziehende Säule während des Auszugvorgangs in diese Befestigungsvorrichtung eingeführt werden kann. Vorzugsweise ist die Befestigungsvorrichtung zur lösbaren Verbindung mit einer Säule am Kopfende eines Stegs entsprechender Länge angeordnet. Erfindungsgemäss kann der Steg jede geeignete Ausgestaltung haben, mit welcher die nachstehend beschriebenen Funktionen erreicht werden. Vorzugsweise handelt es sich bei dem Steg um eine Stange oder ein Gerüst aus mehreren Stangen aus Metall oder einer metallischen Verbindung oder Legierung wie beispielsweise Stahl. Der Steg ist vorzugsweise fest mit dem Boden verankert, beispielsweise durch eine Schraubverbindung.

Der Steg ist in einer derartigen Distanz zur beweglichen Aufspannplatte angeordnet, dass während des Säulenziehens eine von der festen Aufspannplatte entkoppelte Säule durch Bewegung der beweglichen Aufspannplatte aus der Schliessposition in Öffnungsrichtung in die an dem Steg angeordnete Befestigungsvorrichtung eingeführt werden kann. Der Steg muss also derart zur beweglichen Aufspannplatte positioniert sein, dass die zu ziehende Säule während einer Position zwischen der Schliessposition und Öffnungsposition der beweglichen Aufspannplatte in die an dem Steg angeordnete Befestigungsvorrichtung eingeführt wird. Besonders bevorzugt ist der Steg derart positioniert, dass die zu ziehende Säule dann in die an dem Steg angeordnete Befestigungsvorrichtung eingeführt wird, wenn sich die bewegliche Aufspannplatte in Öffnungsposition befindet. Dadurch wird die Bewegung der beweglichen Aufspannplatte optimal für den Vorgang des Säulenziehens genutzt.

Die an dem Steg angeordnete Befestigungsvorrichtung zur lösbaren Verbindung mit einer Säule ist vorzugsweise derart ausgestaltet, dass sie einen von oben auf die Säule wirkenden Klemmzylinder und einen von unten auf die Säule wirkenden Stützzylinder aufweist. Die Zylinder werden vorzugsweise hydraulisch betätigt. Mit dem Klemmzylinder und Stützzylinder können Befestigungsteile wie Mutterhälften mit komplementärer Form zur Säulenoberfläche fest gegen die Säulenoberfläche gepresst werden. Um die Säule fest an den Steg zu kuppeln, werden die Befestigungsteile durch gleichzeitige Betätigung des Klemmzylinders und Stützzylinders fest gegen die Säulenoberfläche gepresst. Es ist aber auch möglich, dass der Steg nur eine Stützfunktion auf die Säule ausübt. In diesem Fall wird lediglich der Stützzylinder betätigt, und das mit dem Stützzylinder verbundene Befestigungsteil von unten gegen die Säule gepresst. Der Klemmzylinder wird nicht betätigt; eine feste Kupplung wird in diesem Modus nicht realisiert.

Im erfindungsgemäss bevorzugten Fall des Ziehens der beiden oberen Säulen einer Formmaschine mit vier Säulen, die an den Ecken der festen Aufspannplatte lösbar befestigt sind, umfasst die erfindungsgemässe Formmaschine zwei derartige Stege, wobei jeweils ein Steg einer der oberen Säulen zugeordnet sind. In vielen Fällen ist es jedoch ausreichend, nur eine der oberen Säulen zu ziehen.

Gemäss einer bevorzugten Ausführungsform der vorliegenden Erfindung sind die beiden unteren Säulen der erfindungsgemässen Formmaschine, insbesondere Druckgiessmaschine, über eine Querstange miteinander verbunden. Eine derartige Ausführungsform ist beispielsweise in der WO 2008/131571 A1 und in der WO 2007/121134 A2 beschrieben. Der Vorteil dieser Ausführungsform besteht darin, dass wie im vorstehend zitierten Stand der Technik beschrieben an der Querstange ein Schliesszylinder befestigt werden kann, dessen anderes Ende mit der Rückseite der beweglichen Aufspannplatte verbunden ist. Dadurch kann die während des Schliessens der Form aufzuwendende Kraft vorteilhaft auf die Säulen verteilt werden.

Bei dieser Ausführungsform ist es möglich, den Steg oder die Stege der Säulenauszugsvorrichtung auf dieser Querstange anzuordnen. Der Steg oder die Stege weisen dann eine entsprechend verringerte Länge auf, da sie nicht bis zum Boden geführt werden müssen. Der Steg oder die Stege können auf bekannte Weise mit der Querstange verbunden werden.

Um eine grössere Stabilität der Maschine zu erreichen, ist es bei dieser Ausführungsform bevorzugt, dass die Querstange mit mindestens einem Stützelement, vorzugsweise zwei Stützelementen, auf dem Boden abgestützt ist. Es kann sich hierbei um zwei einfache Metallstangen handeln, die mit der Querstange und dem Boden fest verbunden sind.

Mit der vorliegenden Erfindung können auf vorteilhafte Weise Säulen einer Formmaschine wie einer Druckgiessmaschine aus dem bereich zwischen fester und beweglicher Aufspannplatte herausgezogen werden. Die vorliegende Erfindung betrifft somit auch ein Verfahren zum Ausziehen mindestens einer Säule aus einer Formmaschine, insbesondere einer Druckgiessmaschine, wobei die Formmaschine eine feste Aufspannplatte mit daran angeordneter erster Giessformhälfte und eine bewegliche Aufspannplatte mit daran angeordneter zweiter Giessformhälfte umfasst und die bewegliche Aufspannplatte auf in der festen Aufspannplatte lösbar befestigten Säulen, vorzugsweise 4 in den Ecken der festen Aufspannplatte lösbar befestigten Säulen, geführt wird, umfassend die Schritte
a) Lösen der lösbaren Befestigung der Säule in der festen Aufspannplatte in einer Maschinenposition, in welcher die bewegliche Aufspannplatte sich in der Schliessposition befindet,
b) Fixierung der Säule an der beweglichen Aufspannplatte durch Schliessen der an der beweglichen Aufspannplatte angeordneten Befestigungsvorrichtung,
c) Bewegen der beweglichen Aufspannplatte in Öffnungsrichtung bis zu einer Position, in welcher die Säule in eine weitere Befestigungsvorrichtung zur lösbaren Verbindung mit einer Säule eingeführt ist, welche an einem Steg angeordnet ist, der sich auf der von der festen Aufspannplatte abgewandten Seite der beweglichen Aufspannplatte befindet,
d) Fixierung der Säule an dem Steg durch Schliessen der an dem Steg angeordneten Befestigungsvorrichtung,
e) Öffnen der an der beweglichen Aufspannplatte angeordneten Befestigungsvorrichtung,
f) Bewegen der beweglichen Aufspannplatte in Schliessrichtung,
g) Gegebenenfalls Wiederholung der Schritte b) bis e) bis die Säule zu einem vorbestimmten Grad aus dem bereich zwischen fester und beweglicher Aufspannplatte herausgezogen worden ist.

Wie vorstehend bereits beschrieben ist es bei herkömmlichen Formmaschinen wie Druckgiessmaschinen erforderlich, das im Schritt g) die Schritte b) bis e) ein weiteres Mal oder zweimal, vorzugsweise zweimal, wiederholt werden, um die Säule vollständig aus dem Bereich zwischen fester und beweglicher Aufspannplatte herauszuziehen.

Wie vorstehend beschrieben ist es bevorzugt, die beiden oberen Säulen einer herkömmlichen Formmaschine wie einer Druckgiessmaschine mit vier in den Ecken der festen Aufspannplatte angeordneten Säulen herauszuziehen, um einen ausreichenden Zugang zur Form zu erreichen. Erfindungsgemäss bevorzugt wird daher das vorstehende Verfahren derart durchgeführt, dass die beiden oberen Säulen einer Formmaschine gleichzeitig herausgezogen werden. In vielen Fällen ist es jedoch ausreichend, nur eine der oberen Säulen zu ziehen.

Um die Bewegung der beweglichen Aufspannplatte optimal für den Vorgang des Säulenziehens zu nutzen, ist es wie vorstehend beschrieben vorteilhaft, dass die bewegliche Aufspannplatte während des vorstehend beschriebenen Verfahrens zwischen ihren Maximalpositionen bewegt wird. Daher ist es bevorzugt, dass im Schritt c) die bewegliche Aufspannplatte in die Öffnungsposition bewegt wird. Es ist weiterhin bevorzugt, dass im Schritt f) die bewegliche Aufspannplatte in die Schliessposition bewegt wird.

Die vorliegende Erfindung wird nachstehend anhand von nicht einschränkenden Ausführungsformen und Zeichnungen näher erläutert. Es zeigen:
- Fig. 1: eine schematische Darstellung einer erfindungsgemässen Druckgiessmaschine
- Fig. 2a: eine schematische Darstellung der an der festen Aufspannplatte angeordneten lösbaren Befestigungsvorrichtung in geschlossener Stellung
- Fig. 2b: eine schematische Darstellung der an der festen Aufspannplatte angeordneten lösbaren Befestigungsvorrichtung in geöffneter Stellung
- Fig. 3a: eine schematische Darstellung der an der beweglichen Aufspannplatte angeordneten lösbaren Befestigungsvorrichtung in formschlüssig gekoppelter Stellung
- Fig. 3b: eine schematische Darstellung der an der beweglichen Aufspannplatte angeordneten lösbaren Befestigungsvorrichtung in geöffneter Stellung
- Fig. 3c: eine schematische Darstellung der an der beweglichen Aufspannplatte angeordneten lösbaren Befestigungsvorrichtung in kraftschlüssig gekoppelter Stellung
- Fig. 4a: eine schematische Darstellung der an dem Steg der Säulenauszugsanordnung angeordneten lösbaren Befestigungsvorrichtung in geöffneter Stellung
- Fig. 4b: eine schematische Darstellung der an dem Steg der Säulenauszugsanordnung angeordneten lösbaren Befestigungsvorrichtung in stützender Stellung
- Fig. 4c: eine schematische Darstellung der an dem Steg der Säulenauszugsanordnung angeordneten lösbaren Befestigungsvorrichtung in kraftschlüssig gekoppelter Stellung
- Fig. 5a-f: ein Ablaufschema des erfindungsgemässen Verfahrens zum Säulenauszug

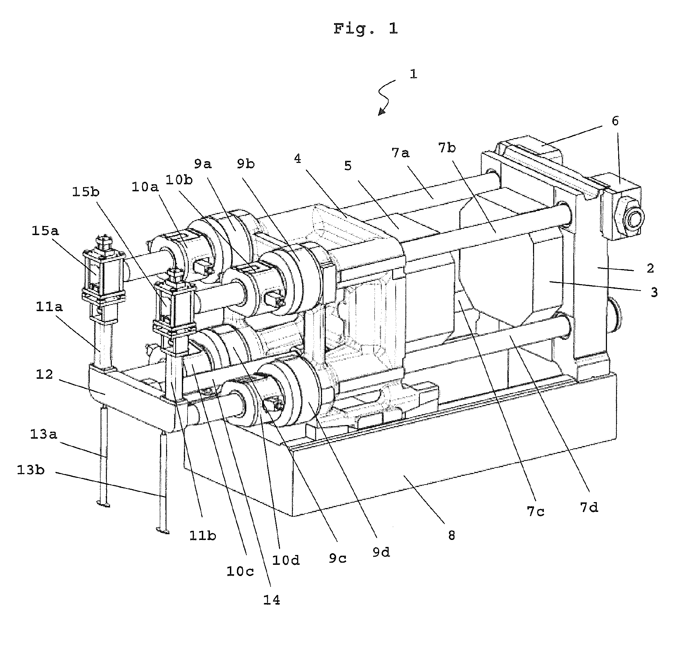

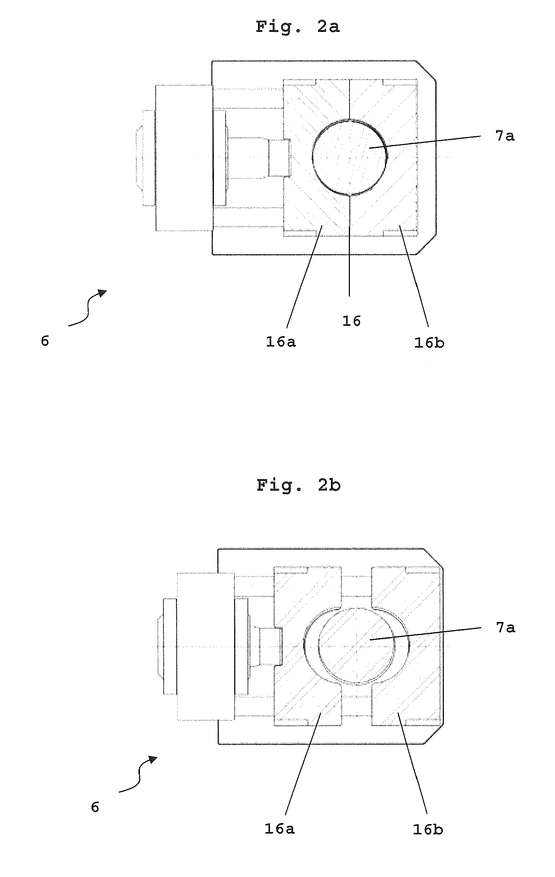

Fig. 1 zeigt eine schematische Darstellung einer erfindungsgemässen Druckgiessmaschine 1. Die Druckgiessmaschine weist eine feste Aufspannplatte 2 mit daran angeordneter erster Giessformhälfte 3 und eine bewegliche Aufspannplatte 4 mit daran angeordneter zweiter Giessformhälfte 5 auf. An der festen Aufspannplatte 2 sind auf der von der beweglichen Aufspannplatte 2 abgewandten Seite an den beiden oberen Ecken Befestigungsvorrichtungen 6 zur lösbaren Verbindung mit einer Säule angeordnet. Die lösbaren Befestigungsvorrichtungen 6 werden nachstehend in Fig. 2a und 2b näher erläutert.

Die Druckgiessmaschine 1 weist vier Säulen 7a-7d auf. Die beiden oberen Säulen 7a und 7b sind in den Befestigungsvorrichtungen 6 an der festen Aufspannplatte 2 fixiert. Die beiden unteren Säulen 7c und 7d sind in der Ausführungsform gemäss Fig. 1 in üblichen Befestigungsvorrichtungen an der festen Aufspannplatte 2 fixiert. Es ist selbstverständlich denkbar, auch für die unteren Säulen 7c und 7d Befestigungsvorrichtungen 6 bereitzustellen.

Die bewegliche Aufspannplatte 4 wird über die Säulen 7a-7d geführt. Die Bewegung der beweglichen Aufspannplatte 4 wird mit Hilfe eines Antriebs (14) wie einem Hydraulikzylinder durchgeführt, der sich im unteren Bereich der beweglichen Aufspannplatte 4 befindet.

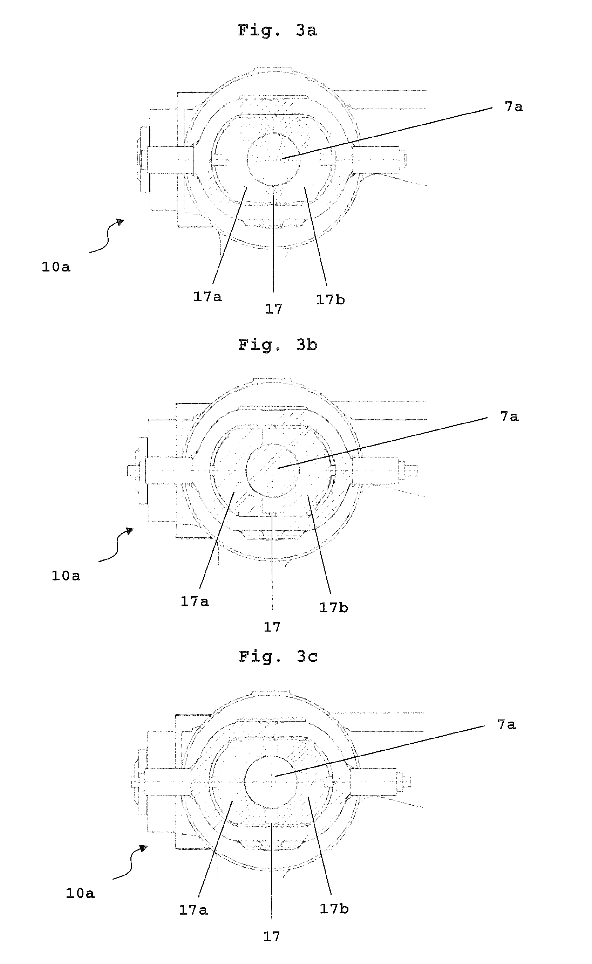

Auf der von der festen Aufspannplatte 2 abgewandten Seite der beweglichen Aufspannplatte 4 sind Spannzylinder 9a-9d für die Säulen 7a-7d bereitgestellt. Hinter den Spannzylindern 9a-9d auf der von der festen Aufspannplatte 2 abgewandten Seite der beweglichen Aufspannplatte 4 sind die lösbaren Befestigungsvorrichtungen 10a-10d der erfindungsgemässen Säulenauszugsvorrichtung bereitgestellt. Die lösbaren Befestigungsvorrichtungen 10a-10d werden nachstehend in Fig. 3a-3c näher erläutert.

Auf der von der festen Aufspannplatte 2 abgewandten Seite der beweglichen Aufspannplatte 4 sind Stege 11a und 11 b angeordnet. Bei dieser Ausführungsform gemäss Fig. 1 sind die Stege 11a und 11 b auf einer Querstange 12 angebracht, welche die beiden unteren Säulen 7c und 7d miteinander verbindet. Die Querstange 12 ist mit zwei Stützelementen 13a und 13b auf dem Boden abgestützt beziehungsweise durch beispielsweise Verschraubung fixiert.

An der Querstange 12 ist weiterhin mittig zwischen den unteren Säulen 7c und 7d ein Schliesszylinder 14 angeordnet.

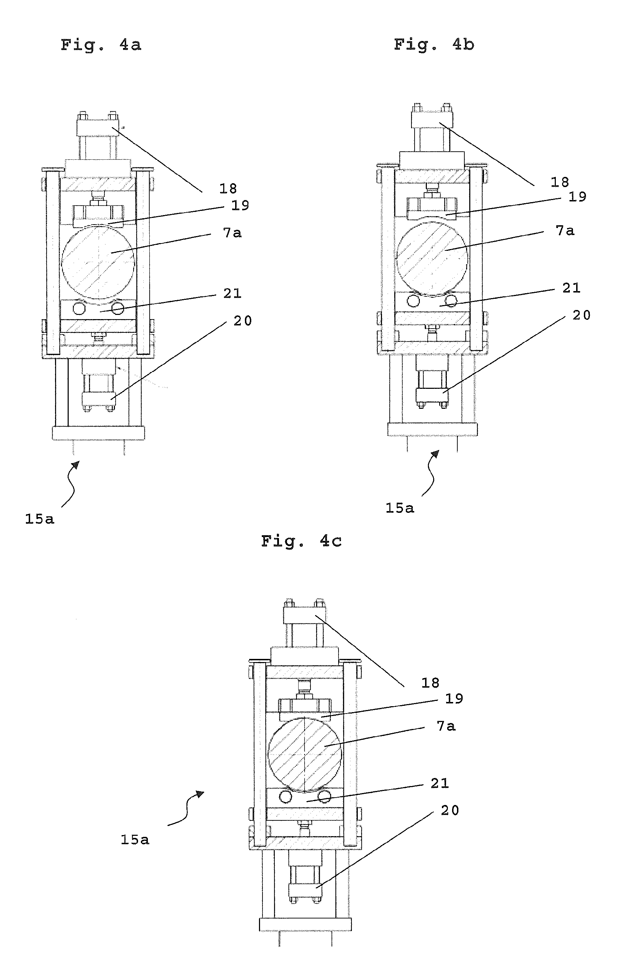

Auf den Stegen 11a und 11b befinden sich Befestigungsvorrichtungen 15a und 15b zur lösbaren Verbindung mit einer Säule. Die Befestigungsvorrichtungen 15a und 15b zur lösbaren Verbindung mit einer Säule werden nachstehend in Fig. 4a-4c näher erläutert.

Die Säulen 7a, 7b sind in der Ausführungsform gemäss Fig. 1 mit der festen Aufspannplatte 2 lösbar verbunden. Die hierfür erforderliche Befestigungsvorrichtungen 6 zur lösbaren Verbindung mit einer Säule sind bei der Ausführungsform gemäss Fig. 1 durch geeignete Kupplungsverbindungen realisiert, die in den Fig. 2a und 2b näher beschrieben sind.

Bei der lösbaren Befestigungsvorrichtung 6 gemäss Fig. 2a und 2b handelt es sich um eine zweiteilige Mutter 16, welche zwei separate Hälften 16a, 16b aufweist, die von der Säule 7a, 7b weg oder zu dieser hin bewegt werden können, beispielsweise durch einen hydraulischen Antrieb. Um die Säule 7a, 7b in der festen Aufspannplatte 2 zu fixieren, werden die beiden Hälften 16a, 16b der Mutter 16 zusammengepresst, wodurch sich eine formschlüssige Verbindung zwischen der so gebildeten Mutter 16 und der Säule 7a, 7b ausbildet.

Während des normalen Formbetriebs der erfindungsgemässen Formmaschine sind die Säulen 7a, 7b durch die vorstehend beschriebenen lösbaren Befestigungsvorrichtungen 6 fest mit der festen Aufspannplatte 2 verbunden. Nur während des Vorgangs des Säulenziehens wird diese Verbindung gelöst.

Die Säulen 7a, 7b, 7c, 7d sind in der Ausführungsform gemäss Fig. 1 mit der beweglichen Aufspannplatte 4 lösbar verbunden. Die hierfür erforderliche Befestigungsvorrichtungen 10a-10d zur lösbaren Verbindung mit einer Säule sind bei der Ausführungsform gemäss Fig. 1 durch geeignete Kupplungsverbindungen realisiert, die in den Fig. 3a-c näher beschrieben sind.

Die an der beweglichen Aufspannplatte 4 angeordnete Befestigungsvorrichtung 10a-10d der Säulenauszugvorrichtung zur lösbaren Verbindung mit einer Säule ist gemäss Fig. 3a-c durch Muttern 17 realisiert.

Die bei der Druckgiessmaschine 1 gemäss Fig. 1 eingesetzten Säulen 7a-7d weisen in dem Abschnitt, in welchem sie bei normalem Formbetrieb der Maschine 1 in Kontakt mit der beweglichen Aufspannplatte 4 kommen, Rillen auf. Diese Rillen dienen dazu, eine möglichst feste Verbindung zwischen beweglicher Aufspannplatte 4 und Säule 7a-7d herzustellen. Hierzu wird wie in Fig. 3a exemplarisch für die obere Säule 7a gezeigt durch die an der befestigten Aufspannplatte 4 angeordnete Befestigungsvorrichtung 10a-10d eine formschlüssige Kupplung mit der Säule 7a-7d hergestellt. Es wird hierfür eine zweiteilige Mutter 17 verwendet, d.h. eine Mutter mit zwei separaten Hälften 17a, 17b, die von der Säule 7a-7d weg oder zu dieser hin bewegt werden können, beispielsweise durch einen hydraulischen Antrieb. Die mit der Säule 7a-7d in Kontakt tretenden Innenflächen der Mutterhälften 17a, 17b weisen Rillen auf, welche formschlüssig in Kontakt mit den Rillen auf der Säulenoberfläche in Wechselwirkung treten können. Mit anderen Worten kann eine formschlüssige Verbindung erzeugt werden, indem eine Erhebung zwischen zwei Rillen auf der Innenfläche der Mutterhälften 17a, 17b in eine Rille auf der Säulenoberfläche eingreift, und umgekehrt. Um die Säule 7a-7d in der beweglichen Aufspannplatte zu fixieren, werden die beiden Hälften 17a, 17b der Mutter 17 zusammengepresst, wodurch sich die vorstehend beschriebene formschlüssige Verbindung zwischen der so gebildeten Mutter und der Säule ausbildet.

Während des normalen Giessbetriebs der Druckgiessmaschine 1 wird die bewegliche Aufspannplatte 4 auf den Säulen 7a-7d bewegt, indem die vorstehend beschriebene formschlüssige Kupplung wie in Fig. 3b gezeigt durch Auseinanderbewegen der Hälften 17a, 17b der Mutter 17 gelöst wird.

Während des Säulenauszugbetriebs der Druckgiessmaschine 1 wird zunächst die vorstehend in Fig. 3a gezeigte formschlüssige Verbindung zwischen Säule 7a-7d und beweglicher Aufspannplatte 4 hergestellt, die Kupplung der Säulen 7a-7d mit der festen Aufspannplatte 2 gelöst und die bewegliche Aufspannplatte 4 aus der Schliessposition in Öffnungsrichtung bewegt.

In einem weiteren Schritt wird die Säule 7a-7d in dem Steg 11a, 11b der Säulenauszugsvorrichtung fixiert, die Kupplung zwischen beweglicher Aufspannplatte 4 und Säule 7a-7d gelöst und die bewegliche Aufspannplatte 4 in Schliessrichtung zurück gefahren. Um die Säule 7a-7d weiter aus dem Bereich zwischen fester und beweglicher Aufspannplatte herauszuziehen, erfolgt eine erneute Kupplung zwischen beweglicher Aufspannplatte 4 und Säule 7a-7d. In diesem Verfahrensschritt kann jedoch in der Regel keine formschlüssige Kupplung mehr zwischen beweglicher Aufspannplatte 4 und Säule 7a-7d realisiert werden, da sich der Rillen aufweisende Oberflächenabschnitt der Säule 7a-7d bereits an einer von der beweglichen Aufspannplatte entfernten Position befindet. In diesem Verfahrensabschnitt wird daher eine in Fig. 3c gezeigte kraftschlüssige Verbindung zwischen beweglicher Aufspannplatte 4 und Säule 7a-7d realisiert, indem die Hälften 17a, 17b der Mutter 17 mit hohem Kraftaufwand fest auf einen nicht gerillten Oberflächenabschnitt der Säule 7a-7d gepresst werden. Diese Kopplung ist nicht so fest wie die vorstehend beschrieben formschlüssige Kopplung, genügt aber für den Zweck des Säulenziehens.

Die Druckgiessmaschine 1 gemäss Fig. 1 weist als wesentlichen Bestandteil der erfindungsgemässen Säulenauszugsvorrichtung zwei Stege 11a, 11b auf, welche auf der von der festen Aufspannplatte 2 abgewandten Seite der beweglichen Aufspannplatte 4 angeordnet sind. Die Stege 11a, 11b weisen eine Befestigungsvorrichtung 15a, 15b zur lösbaren Verbindung mit einer Säule auf, welche derart an den Stegen 11a, 11b angeordnet ist, dass eine zu ziehende Säule 7a,7b während des Auszugvorgangs in diese Befestigungsvorrichtung 15a, 15b eingeführt werden kann. Hierzu ist die Befestigungsvorrichtung 15a, 15b zur lösbaren Verbindung mit einer Säule am Kopfende des Stegs 11a, 11b entsprechender Länge angeordnet.

Die an dem Steg angeordnete Befestigungsvorrichtung 15a, 15b zur lösbaren Verbindung mit einer Säule ist wie in Fig. 4a-4c exemplarisch für die Befestigungsvorrichtung 15a gezeigt derart ausgestaltet, dass einen von oben auf die Säule 7a, 7b wirkenden Klemmzylinder 18 und einen von unten auf die Säule 7a, 7b wirkenden Stützzylinder 20 aufweist. Die Zylinder 18, 20 werden vorzugsweise hydraulisch betätigt. Mit dem Klemmzylinder 18 und Stützzylinder 20 können Befestigungsteile 19, 21 wie Mutterhälften mit komplementärer Form zur Säulenoberfläche fest gegen die Säulenoberfläche gepresst werden. Sind wie in Fig. 4a gezeigt der Klemmzylinder 18 und der Stützzylinder 20 nicht betätigt, kommt es zu keiner Kopplung mit der Säule 7a, 7b. Die Säule 7a, 7b kann frei aus dem Steg 11a, 11b heraus und in diesen hinein bewegt werden. Um die Säule 7a, 7b fest an den Steg 11a, 11b zu kuppeln, werden die Befestigungsteile 19, 21 wie in Fig. 4c gezeigt durch Betätigung des Klemmzylinders 18 und Stützzylinders 20 fest gegen die Säulenoberfläche gepresst. Es ist aber auch möglich, dass der Steg nur eine Stützfunktion auf die Säule ausübt. In diesem Fall wird wie in Fig. 4b gezeigt lediglich der Stützzylinder 20 betätigt, und das mit dem Stützzylinder 20 verbundene Befestigungsteil 21 von unten gegen die Säule 7a, 7b gepresst. Der Klemmzylinder 18 wird nicht betätigt; eine feste Kupplung wird in diesem Modus nicht realisiert.

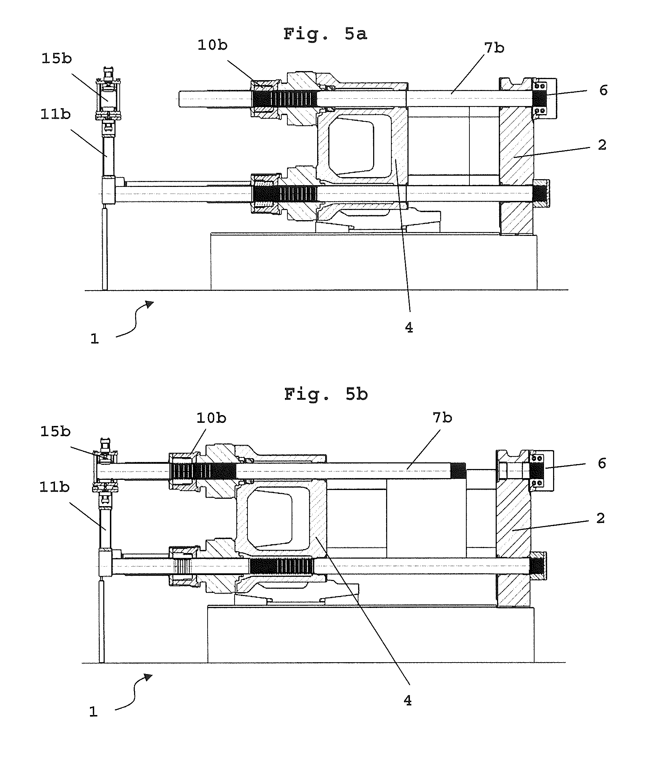

In den Fig. 5a-5f ist schematisch der Ablauf des erfindungsgemässen Säulenauszugsverfahrens anhand der Ausführungsform gemäss Fig. 1 dargestellt. In den Fig. 5a-5f sind nur die für das verfahren relevanten Bauteile nochmals durch Bezugszeichen beschrieben. Die übrigen Bauteile der Druckgiessmaschine 1 sind in Fig. 1 beschrieben. In den Fig.5a-5f ist exemplarisch das gleichzeitige Ziehen der beiden oberen Säulen 7a,7b dargestellt, wobei die Säule 7a und die zugehörigen Teile der erfindungsgemässen Säulenauszugsvorrichtung verdeckt und somit nicht sichtbar sind. E soll nochmals betont werden, dass in vielen Fällen das Ziehen nur einer der beiden oberen Säulen ausreichend ist.

In Fig. 5a befindet sich die bewegliche Aufspannplatte 4 in der Schliessposition. In dieser Betriebsstellung werden zum Säulenziehen die Befestigungsvorrichtungen 6 an der festen Aufspannplatte 2 wie in Fig. 2b gezeigt geöffnet. Die Befestigungsvorrichtungen 10a, 10b werden wie in Fig. 3a gezeigt formschlüssig mit den Säulen 7a, 7b gekoppelt. Die Befestigungsvorrichtungen 15a, 15b an den Stegen 11a, 11b sind wie in Fig. 4a gezeigt geöffnet.

Wie in Fig. 5b gezeigt wird nun die bewegliche Aufspannplatte 4 in Öffnungsrichtung bewegt; in der Ausführungsform gemäss Fig. 5b bis in die Öffnungsposition. Da die Säulen 7a, 7b nicht mit an die feste Aufspannplatte 2 gekoppelt sind, werden sie aufgrund der Bewegung der beweglichen Aufspannplatte 4, an welche sie gekoppelt sind, aus der festen Aufspannplatte 2 herausgezogen und in die Befestigungsvorrichtungen 15a, 15b eingeführt.

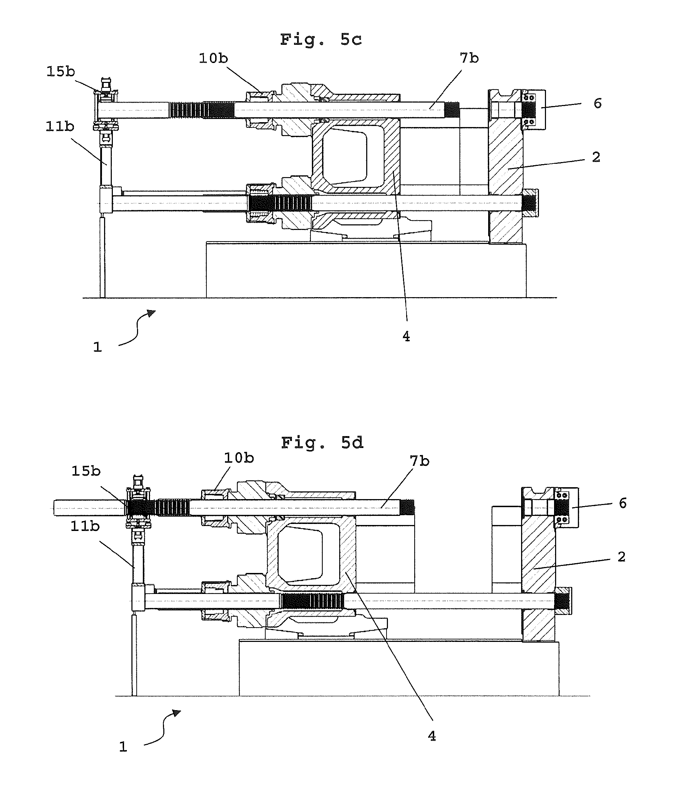

Wie in Fig. 5c gezeigt werden anschliessend die Befestigungsvorrichtungen 15a, 15b wie in Fig. 4c dargestellt durch Betätigen von Klemmzylinder 18 und Stützzylinder 20 formschlüssig mit den Säulen 7a, 7b gekoppelt. Die Säulen 7a, 7b sind nun in den Stegen 11a, 11b fixiert. Die Befestigungsvorrichtungen 10a, 10b werden wie in Fig. 3b dargestellt geöffnet. Die bewegliche Aufspannplatte 4 ist nun von den Säulen 7a, 7b entkoppelt und kann in die Schliessrichtung bewegt werden, ohne dabei die Säulen 7a, 7b zu bewegen. In der Ausführungsform gemäss 5c wird die bewegliche Aufspannplatte 4 in ihre Schliessposition zurückbewegt.

Anschliessend wird das erfindungsgemässe Säulenauszugsverfahren in dieser Ausführungsform ein zweites Mal durchgeführt. Die Befestigungsvorrichtungen 10a, 10b werden nun mit den Säulen 7a, 7b kraftschlüssig gekoppelt, wie in Fig. 3c dargestellt. Die Befestigungsvorrichtungen 15a, 15b an den Stegen 11a, 11b werden wie in Fig. 4a gezeigt geöffnet. Wie in Fig. 5d gezeigt wird die bewegliche Aufspannplatte 4 nun in Öffnungsrichtung bewegt, gemäss Fig. 5d in ihre Öffnungsposition. Hierbei werden die Säulen 7a, 7b um den entsprechenden Betrag der Bewegung der beweglichen Aufspannplatte 4 herausgezogen.

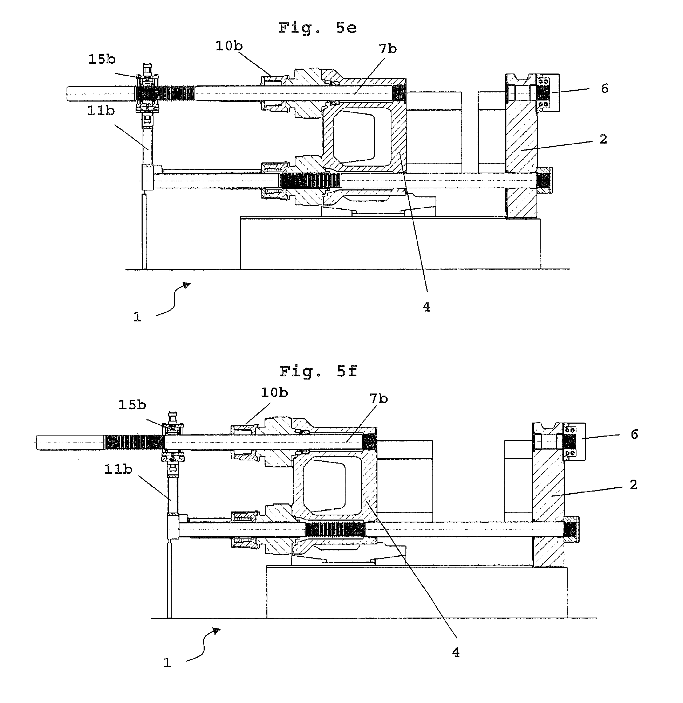

Wie in Fig. 5e gezeigt werden anschliessend die Befestigungsvorrichtungen 15a, 15b wie in Fig. 4c dargestellt durch Betätigen von Klemmzylinder 18 und Stützzylinder 20 formschlüssig mit den Säulen 7a, 7b gekoppelt. Die Säulen 7a, 7b sind nun in den Stegen 11a, 11b fixiert. Die Befestigungsvorrichtungen 10a, 10b werden wie in Fig. 3b dargestellt geöffnet. Die bewegliche Aufspannplatte 4 ist nun von den Säulen 7a, 7b entkoppelt und kann in die Schliessrichtung bewegt werden, ohne dabei die Säulen 7a, 7b zu bewegen. In der Ausführungsform gemäss 5e wird die bewegliche Aufspannplatte 4 nicht mehr vollständig in ihre Schliessposition zurückbewegt, da bei der Wiederholung der vorstehenden Schritte die Säulen 7a, 7b nun nicht mehr um den gesamten Betrag der Bewegung der beweglichen Aufspannplatte 4 in die Öffnungsposition herausgezogen werden müssen.

Anschliessend wird das erfindungsgemässe Säulenauszugsverfahren in dieser Ausführungsform ein drittes Mal durchgeführt. Die Befestigungsvorrichtungen 10a, 10b werden nun mit den Säulen 7a, 7b kraftschlüssig gekoppelt, wie in Fig. 3c dargestellt. Die Befestigungsvorrichtungen 15a, 15b an den Stegen 11a, 11b werden wie in Fig. 4a gezeigt geöffnet. Wie in Fig. 5f gezeigt wird die bewegliche Aufspannplatte 4 nun in Öffnungsrichtung bewegt, gemäss Fig. 5f in ihre Öffnungsposition. Hierbei werden die Säulen 7a, 7b um den entsprechenden Betrag der Bewegung der beweglichen Aufspannplatte 4 herausgezogen.

## Patentansprüche

1. Säulenauszugvorrichtung für mindestens eine Säule (7a, 7b, 7c, 7d) einer Formmaschine (1) mit einer festen Aufspannplatte (2) mit daran angeordneter erster Giessformhälfte (3) und einer beweglichen Aufspannplatte (4) mit daran angeordneter zweiter Giessformhälfte (5), wobei die bewegliche Aufspannplatte (4) auf in der festen Aufspannplatte (2) lösbar befestigten Säulen (7a, 7b, 7c, 7d) bewegt werden kann, und mit einer an der beweglichen Aufspannplatte (4) angeordneten Befestigungsvorrichtung (10a, 10b, 10c, 10d) zur lösbaren Verbindung mit einer Säule, **dadurch gekennzeichnet, dass** die Säulenauszugsvorrichtung aufweist:
- eine weitere Befestigungsvorrichtung (15a, 15b) zur lösbaren Verbindung mit einer Säule, welche an einem Steg (11a, 11b) angeordnet ist, der sich auf der von der festen Aufspannplatte (2) abgewandten Seite der beweglichen Aufspannplatte (4) befindet.

2. Säulenauszugvorrichtung nach Anspruch 1, **dadurch gekennzeichnet, dass** die an der beweglichen Aufspannplatte (4) angeordnete Befestigungsvorrichtung (10a, 10b, 10c, 10d) der Säulenauszugvorrichtung zur lösbaren Verbindung mit einer Säule eine Kupplung ist, mit welcher wahlweise eine formschlüssige oder kraftschlüssige Verbindung mit der Säule (7a, 7b, 7c, 7d) hergestellt werden kann.

3. Säulenauszugvorrichtung nach einem der Ansprüche 1 oder 2,
**dadurch gekennzeichnet, dass** die an dem Steg (11a, 11b) angeordnete weitere Befestigungsvorrichtung (15a, 15b) zur lösbaren Verbindung mit einer Säule einen von oben auf die Säule (7a, 7b) wirkenden Klemmzylinder (18) und einen von unten auf die Säule (7a, 7b) wirkenden Stützzylinder 20) umfasst.

4. Formmaschine, mit einer festen Aufspannplatte (2) mit daran angeordneter erster Giessformhälfte (3) und einer beweglichen Aufspannplatte (4) mit daran angeordneter zweiter Giessformhälfte (5), wobei die bewegliche Aufspannplatte (4) auf in der festen Aufspannplatte (2) lösbar befestigten Säulen (7a, 7b, 7c, 7d) bewegt werden kann, **dadurch gekennzeichnet, dass** die Formmaschine (1) eine Säulenauszugvorrichtung gemäss einem der Ansprüche 1 bis 3 umfasst.

5. Formmaschine nach Anspruch 4, **dadurch gekennzeichnet, dass** für zwei Säulender Formmaschine (1) jeweils eine Säulenauszugsvorrichtung gemäss einem der Ansprüche 1 bis 3 bereitgestellt ist.

6. Formmaschine nach einem der Ansprüche 4 oder 5, **dadurch gekennzeichnet, dass** der Steg oder die Stege (11a, 11b) der Säulenauszugsvorrichtung auf einer Querstange (12) angeordnet sind, welche an den Enden der unteren Säulen (7c, 7d) der Formmaschine befestigt ist.

7. Formmaschine nach Anspruch 6, **dadurch gekennzeichnet, dass** die Querstange (12) an einem Ende eines Schliesszylinders (14) befestigt ist, dessen anderes Ende mit der Rückseite der beweglichen Aufspannplatte (4) verbunden ist.

8. Formmaschine nach einem der Ansprüche 4 bis 7, **dadurch gekennzeichnet, dass** die Querstange (12) mit mindestens einem Stützelementauf dem Boden abgestützt ist.

9. Verfahren zum Ausziehen mindestens einer Säule aus einer Formmaschine (1), wobei die Formmaschine (1) eine feste Aufspannplatte (2) mit daran angeordneter erster Giessformhälfte (3) und eine bewegliche Aufspannplatte (4) mit daran angeordneter zweiter Giessformhälfte (5) umfasst und die bewegliche Aufspannplatte (4) auf in der festen Aufspannplatte (2) lösbar befestigten Säulen (7a, 7b, 7c, 7d) geführt wird, umfassend die Schritte
a) Lösen der lösbaren Befestigung (6) der Säule (7a, 7b, 7c, 7d) in der festen Aufspannplatte (2) in einer Maschinenposition, in welcher die bewegliche Aufspannplatte (4) sich in der Schliessposition befindet,
b) Fixierung der Säule (7a, 7b, 7c, 7d) an der beweglichen Aufspannplatte (4) durch Schliessen der an der beweglichen Aufspannplatte angeordneten Befestigungsvorrichtung (10a, 10b, 10c, 10d),
c) Bewegen der beweglichen Aufspannplatte (4) in Öffnungsrichtung bis zu einer Position, in welcher die Säule (7a, 7b, 7c, 7d) in eine weitere Befestigungsvorrichtung (15a, 15 b) zur lösbaren Verbindung mit einer Säule eingeführt ist, welche an einem Steg (11a, 11b) angeordnet ist, der sich auf der von der festen Aufspannplatte (2) abgewandten Seite der beweglichen Aufspannplatte (4) befindet,
d) Fixierung der Säule (7a, 7b, 7c, 7d) an dem Steg (11a, 11b) durch Schliessen der an dem Steg (11a, 11b) angeordneten Befestigungsvorrichtung (15a, 15b),
e) Öffnen der an der beweglichen Aufspannplatte (4) angeordneten Befestigungsvorrichtung (10a, 10b, 10c, 10d),
f) Bewegen der beweglichen Aufspannplatte (4) in Schliessrichtung,
g) Gegebenenfalls Wiederholung der Schritte b) bis e) bis die Säule (10a, 10b, 10c, 10d) zu einem vorbestimmten Grad aus dem Bereich zwischen fester und beweglicher Aufspannplatte herausgezogen worden ist.

10. Verfahren nach Anspruch 9, **dadurch gekennzeichnet, dass** im Schritt g) die Schritte b) bis e) ein weiteres Mal oder zweimalwiederholt werden.

11. Verfahren nach Anspruch 9 oder 10, **dadurch gekennzeichnet, dass** die beiden oberen Säulen (7a, 7b) einer Formmaschine (1) gleichzeitig oder einzeln herausgezogen werden.

12. Verfahren nach einem der Ansprüche 9 bis 11, **dadurch gekennzeichnet, dass** im Schritt d) die Fixierung der Säule (7a, 7b, 7c, 7d) an dem Steg (11a, 11 b) durch einen von oben auf die Säule (7a, 7b, 7c, 7d) wirkenden Klemmzylinder (18) und einen von unten auf die Säule (7a, 7b, 7c, 7d) wirkenden Stützzylinder (20) erfolgt.

13. Verfahren nach einem der Ansprüche 9 bis 12, **dadurch gekennzeichnet, dass** im Schritt c) die bewegliche Aufspannplatte (4) in die Öffnungsposition bewegt wird.

14. Verfahren nach einem der Ansprüche 9 bis 13, **dadurch gekennzeichnet, dass** im Schritt f) die bewegliche Aufspannplatte (4) in die Schliessposition bewegt wird.

## Claims

1. Tie bar withdrawing device for at least one tie bar (7a, 7b, 7c, 7d) of a casting machine (1) having a fixed die plate (2) with a first casting-mould half (3) arranged thereon and having a movable die plate (4) with a second casting-mould half (5) arranged thereon, wherein the movable die plate (4) can be moved on tie bars(7a, 7b, 7c, 7d) that are fastened releasably in the fixed die plate (2), and having a fastening device (10a, 10b, 10c, 10d) arranged on the movable die plate (4) for releasable connection to a tie bar, **characterized in that** the tie bar withdrawing device has:
- a further fastening device (15a, 15b) for releasable connection to a tie bar, said further fastening device (15a, 15b) being arranged on a rack (11a, 11b) which is located on that side of the movable die plate (4) that is remote from the fixed die plate (2).

2. Tie bar withdrawing device according to Claim 1, **characterized in that** the fastening device (10a, 10b, 10c, 10d), for releasable connection to a tie bar, of the tie bar withdrawing device, said fastening device (10a, 10b, 10c, 10d) being arranged on the movable die plate (4), is a coupling by way of which optionally a form-fitting or force-fitting connection to the tie bar(7a, 7b, 7c, 7d) can be established.

3. Tie bar withdrawing device according to either of Claims 1 and 2, **characterized in that** the further fastening device (15a, 15b) for releasable connection to a tie bar, said further fastening device (15a, 15b) being arranged on the rack (11a, 11b), comprises a clamping cylinder (18) that acts on the tie bar(7a, 7b) from above and a supporting cylinder (20) that acts on the tie bar(7a, 7b) from below.

4. Casting machine having a fixed die plate (2) with a first casting-mould half (3) arranged thereon and having a movable die plate (4) with a second casting-mould half (5) arranged thereon, wherein the movable die plate (4) can be moved on tie bars(7a, 7b, 7c, 7d) that are fastened releasably in the fixed die plate (2), **characterized in that** the casting machine (1) comprises a tie bar withdrawing device according to one of Claims 1 to 3.

5. Casting machine according to Claim 4, **characterized in that** for two tie bars of the casting machine (1) in each case one tie bar withdrawing device according to one of Claims 1 to 3 is provided.

6. Casting machine according to one of Claims 4 and 5, **characterized in that** the rack or the racks (11a, 11b) of the tie bar withdrawing device is/are arranged on a crossbar (12) which is fastened to the ends of the lower tie bars(7c, 7d) of the casting machine.

7. Casting machine according to Claim 6, **characterized in that** the crossbar (12) is fastened to one end of a closing cylinder (14), the other end of which is connected to the rear side of the movable die plate (4).

8. Casting machine according to one of Claims 4 to 7, **characterized in that** the crossbar (12) is supported on the ground by way of at least one supporting element.

9. Method for withdrawing at least one tie bar from a casting machine (1), wherein the casting machine (1) comprises a fixed die plate (2) with a first casting-mould half (3) arranged thereon and a movable die plate (4) with a second casting-mould half (5) arranged thereon, and the movable die plate (4) is guided on tie bars (7a, 7b, 7c, 7d) that are fastened releasably in the fixed die plate (2), comprising the steps of:
a) releasing the releasable fastener (6) of the tie bar(7a, 7b, 7c, 7d) in the fixed die plate (2) in a machine position in which the movable die plate (4) is in the closing position,
b) fixing the tie bar(7a, 7b, 7c, 7d) to the movable die plate (4) by closing the fastening device (10a, 10b, 10c, 10d) arranged on the movable die plate,
c) moving the movable die plate (4) in the opening direction to a position in which the tie bar(7a, 7b, 7c, 7d) has been introduced into a further fastening device (15a, 15b) for releasable connection to a tie bar, said further fastening device (15a, 15b) being arranged on a rack (11a, 11b) which is located on that side of the movable die plate (4) that is remote from the fixed die plate (2),
d) fixing the tie bar(7a, 7b, 7c, 7d) to the rack (11a, 11b) by closing the fastening device (15a, 15b) arranged on the rack (11a, 11b),
c) opening the fastening device (10a, 10b, 10c, 10d) arranged on the movable die plate (4),
f) moving the movable die plate (4) in the closing direction,
g) optionally repeating steps b) to e) until the tie bar(10a, 10b, 10c, 10d) has been withdrawn to a predetermined degree from the region between the fixed and movable die plates.

10. Method according to Claim 9, **characterized in that** steps b) to e) are repeated a further once or twice in step g).

11. Method according to Claim 9 or 10, **characterized in that** the two upper tie bars (7a, 7b) of a casting machine (1) are withdrawn simultaneously or individually.

12. Method according to one of Claims 9 to 11, **characterized in that**, in step d), the tie bar (7a, 7b, 7c, 7d) is fixed to the rack (11a, 11b) by way of a clamping cylinder (18) that acts on the tie bar (7a, 7b, 7c, 7d) from above and a supporting cylinder (20) that acts on the tie bar(7a, 7b, 7c, 7d) from below.

13. Method according to one of Claims 9 to 12, **characterized in that**, in step c), the movable die plate (4) is moved into the opening position.

14. Method according to one of Claims 9 to 13, **characterized in that**, in step f), the movable die plate (4) is moved into the closing position.

## Revendications

1. Dispositif d'extraction de barre de liaison pour au moins une barre de liaison (7a, 7b, 7c, 7d) d'une machine de moulage (1) avec une plaque de serrage (2) fixe avec une première moitié de forme coulée (3) disposée contre et une plaque de serrage (4) mobile avec une deuxième moitié de forme coulée (5) disposée contre, la plaque de serrage (4) mobile pouvant être déplacée sur les barres de liaison (7a, 7b, 7c, 7d) fixées de façon amovible dans la plaque de serrage (2) fixe et avec un dispositif de fixation (10a, 10b, 10c, 10d) disposé au niveau de la plaque de serrage (4) mobile pour la jonction amovible avec une barre de liaison, **caractérisé en ce que** le dispositif d'extraction de barre de liaison comporte :
un dispositif de fixation (15a, 15b) supplémentaire pour la jonction amovible avec une barre de liaison, ledit dispositif étant disposé au niveau d'un étai (11a, 11b) se trouvant sur le côté de la plaque de serrage (4) mobile opposé à la plaque de serrage (2) fixe.

2. Dispositif d'extraction de barre de liaison selon la revendication 1, **caractérisé en ce que** le dispositif de fixation (10a, 10b, 10c, 10d), disposé au niveau de la plaque de serrage (4) mobile, du dispositif d'extraction de barre de liaison prévu pour la jonction amovible avec une barre de liaison est un couplage avec lequel au choix une jonction réalisée par complémentarité de formes ou réalisée par complémentarité de forces peut être fabriquée avec la barre de liaison (7a, 7b, 7c, 7d).

3. Dispositif d'extraction de barre de liaison selon l'une quelconque des revendications 1 ou 2, **caractérisé en ce que** le dispositif de fixation (15a, 15b) supplémentaire disposé au niveau de l'étai (11a, 11b) comprend pour la jonction amovible avec une barre de liaison un cylindre de coincement (18) agissant par en haut sur la barre de liaison (7a, 7b) et un cylindre de maintien (20) agissant par en bas sur la barre de liaison (7a, 7b).

4. Machine de moulage, avec une plaque de serrage (2) fixe avec une première moitié de forme coulée (3) disposée contre et une plaque de serrage (4) mobile avec une deuxième moitié de forme coulée (5) disposée contre, la plaque de serrage (4) mobile pouvant être déplacée sur les barres de liaison (7a, 7b, 7c, 7d) fixées de façon amovible dans la plaque de serrage (2) fixe, **caractérisée en ce que** la machine de moulage (1) comprend un dispositif d'extraction de barre de liaison selon l'une quelconque des revendications 1 à 3.

5. Machine de moulage selon la revendication 4, **caractérisée en ce qu'**un dispositif d'extraction de barre de liaison selon l'une quelconque des revendications 1 à 3 est respectivement mis à disposition pour deux barres de liaison de la machine de moulage (1).

6. Machine de moulage selon l'une quelconque des revendications 4 ou 5, **caractérisée en ce que** l'étai ou les étais (11a, 11b) du dispositif d'extraction de barre de liaison sont disposés sur une barre transversale (12) fixée aux extrémités des barres de liaison (7c, 7d) inférieures de la machine de moulage.

7. Machine de moulage selon la revendication 6, **caractérisée en ce que** la barre transversale (12) est fixée à une extrémité d'un cylindre de fermeture (14) dont l'autre extrémité est reliée au côté arrière de la plaque de serrage (4) mobile.

8. Machine de moulage selon l'une quelconque des revendications 4 à 7, **caractérisée en ce que** la barre transversale (12) est maintenue avec au moins un élément de maintien sur le sol.

9. Procédé d'extraction d'au moins une barre de liaison à partir d'une machine de moulage (1), la machine de moulage (1) comprenant une plaque de serrage (2) fixe avec une première moitié de forme coulée (3) disposée contre et une plaque de serrage (4) mobile avec une deuxième moitié de forme coulée (5) disposée contre et la plaque de serrage (4) mobile étant amenée sur les barres de liaison (7a, 7b, 7c, 7d) fixées de façon amovible dans la plaque de serrage (2) fixe, comprenant les étapes :
a) desserrage de la fixation (6) amovible de la barre de liaison (7a, 7b, 7c, 7d) dans la position de fermeture dans la plaque de serrage (2) fixe dans une position de machine dans laquelle la plaque de serrage (4) mobile se trouve ;
b) fixation de la barre de liaison (7a, 7b, 7c, 7d) prévue au niveau de la plaque de serrage (4) mobile par fermeture du dispositif de fixation (10a, 10b, 10c, 10d) disposé au niveau de la plaque de serrage mobile ;
c) déplacement de la plaque de serrage (4) mobile dans la direction d'ouverture jusqu'à une position dans laquelle la barre de liaison (7a, 7b, 7c, 7d) est amenée dans un dispositif de fixation (15a, 15b) supplémentaire pour la jonction amovible avec une barre de liaison disposée au niveau d'un étai (11a, 11b) se trouvant sur le côté, opposé à la plaque de serrage (2) fixe, de la plaque de serrage (4) mobile ;
d) fixation de la barre de liaison (7a, 7b, 7c, 7d) à l'étai (11a, 11b) par fermeture du dispositif de fixation (15a, 15b) disposé au niveau de l'étai (11a, 11b) ;
e) ouverture du dispositif de fixation (10a, 10b, 10c, 10d) disposé au niveau de la plaque de serrage (4) mobile ;
f) déplacement de la plaque de serrage (4) mobile en direction de la fermeture ;
g) le cas échéant répétition des étapes b) à e) jusqu'à ce que la barre de liaison (10a, 10b, 10c, 10d) soit extraite d'un degré prédéterminé hors de la zone située entre la plaque de serrage fixe et mobile.

10. Procédé selon la revendication 9, **caractérisé en ce qu'**à l'étape g), les étapes b) à e) sont répétées une ou deux fois supplémentaires.

11. Procédé selon la revendication 9 ou 10, **caractérisé en ce que** les deux barres de liaison (7a, 7b) supérieures d'une machine de moulage (1) sont extraites simultanément ou individuellement.

12. Procédé selon l'une quelconque des revendications 9 à 11, **caractérisé en ce qu'**à l'étape d), la fixation de la barre de liaison (7a, 7b, 7c, 7d) se produit au niveau de l'étai (11a, 11b) par le biais d'un cylindre de coincement (18) agissant par en haut sur la barre de liaison (7a, 7b, 7c, 7d) et un cylindre de maintien (20) agissant par en bas sur la barre de liaison (7a, 7b, 7c, 7d).

13. Procédé selon l'une quelconque des revendications 9 à 12, **caractérisé en ce qu'**à l'étape c), la plaque de serrage (4) mobile est déplacée dans la position d'ouverture.

14. Procédé selon l'une quelconque des revendications 9 à 13, **caractérisé en ce qu'**à l'étape f), la plaque de serrage (4) mobile est déplacée dans la position de fermeture.
